# FASCICULE DE BREVET EUROPEEN

(11) **EP 0 643 466 B1**
(45) Date de publication et mention de la délivrance du brevet: **29.04.1998**
(21) Numéro de dépôt: 94410074.2
(22) Date de dépôt: 09.09.1994
(51) Int. Cl.: H02K 11/00

(54) **Moteur électrique à sécurité thermique**
Elektromotor mit Wärmesicherheit
Electric motor with thermal safety

(30) Priorité: 10.09.1993 FR 9311060
(43) Date de publication de la demande: 15.03.1995
(73) Titulaire: CROUZET Automatismes, 26000 Valence (FR)
(72) Inventeur: Guinet,Michel, F-14610 Cambes en Plaine (FR); Hilaire, Jean-François, F-26000 Valence (FR)
(74) Mandataire: de Beaumont, Michel

(56) Documents cités:
- EP-A- 0 017 075
- EP-A- 0 511 384
- DE-A- 2 842 119
- PATENT ABSTRACTS OF JAPAN vol. 14, no. 401 (E-971) (4344) 30 Août 1990 & JP-A-02 151 242 (FUJITSU) 11 Juin 1990

## Description

La présente invention concerne le domaine des moteurs électriques de dimensions moyennes, par exemple des moteurs d'une dimension propre à tenir dans la main ayant des diamètres de l'ordre de 5 à 15 cm et des poids inférieurs au kilogramme.

De tels moteurs s'appliquent par exemple à l'entrainement de turbines de ventilation et sont parfois vendus avec leurs circuits électroniques de commande associés au moteur lui-même en un tout matériel et fonctionnel.

Même quand le circuit électronique de commande fonctionne convenablement, le moteur est susceptible de s'échauffer, par exemple par suite de conditions de frottement ou de blocage accidentel. Pour éviter la destruction du moteur, il est connu d'associer au moteur des sondes de température et des circuits d'inhibition qui constituent une adjonction au circuit électronique de commande.

Des exemples de telles sondes apparaissent par exemple dans les documents EP-A-0 017 075 et EP-A-0 511 384.

Il est également connu de monter les composants électroniques de commande sur la carcasse du moteur mais ceci entraîne souvent des montages complexes ou inefficaces. A titre d'exemple, le document FR-A-2679076 propose un montage utilisant un ou plusieurs étriers et le document FR-A-2667202 concerne des composants de puissance de type à montage en surface.

Un objet de la présente invention est de prévoir une protection thermique d'un moteur faisant partie intégrante du circuit électronique de commande du moteur et ne compliquant pas ce circuit de commande.

Un autre objet de la présente invention est de prévoir un mode de montage simple des composants électroniques sur une enveloppe de moteur.

Ces objets sont atteints selon la présente invention en prévoyant un moteur électrique dont l'aspect extérieur est celui d'une enveloppe métallique, un arbre de rotation du moteur sortant d'au moins un côté de l'enveloppe, ce moteur étant associé à un circuit électronique de commande dont les composants sont montés sur une carte de circuit imprimé, caractérisé en ce que au moins un desdits composants est un circuit intégré comprenant des moyens d'inhibition quand sa température dépasse une valeur prédéterminée, ledit circuit intégré est monté de sorte que sa face opposée au circuit imprimé constitue la surface la plus en saillie parmi les composants montés sur le circuit imprimé, et le circuit imprimé est monté sur une paroi de ladite enveloppe de sorte que ladite face du circuit intégré soit en appui sur ladite paroi et en contact direct avec celle-ci.

Selon un mode de réalisation de la présente invention, le circuit imprimé est vissé sur ladite paroi, les vis étant disposées pour que ladite face du circuit intégré soit appliquée contre la paroi sous l'effet de l'élasticité de la carte de circuit imprimé.

Selon un mode de réalisation de la présente invention, il est prévu une plaque de protection isolante montée en regard de la carte de circuit imprimé du côté opposé à la paroi.

Selon un mode de réalisation de la présente invention, la paroi est disposée du côté opposé à celui dont sort l'arbre de rotation du moteur.

Une application du moteur selon l'invention réside dans un moteur d'entrainement d'une turbine coaxiale et périphérique à ce moteur.

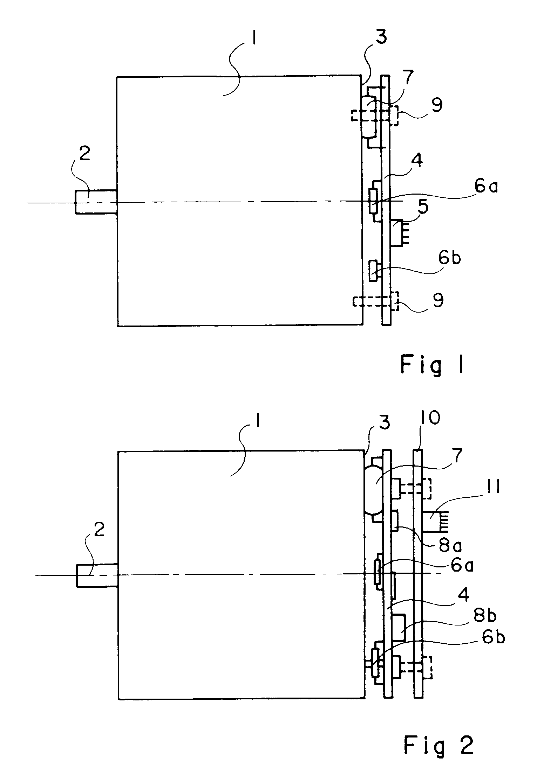

Ces objets, caractéristiques, avantages de la présente invention seront exposés en détail dans la description suivante de modes de réalisation particuliers faite à titre non-limitatif en relation avec les figures 1 et 2 jointes qui représentent deux variantes de mise en oeuvre de la présente invention.

La figure 1 représente une vue de côté d'un moteur dont on voit l'enveloppe métallique cylindrique 1 dont fait saillie, d'un côté au moins, un arbre de rotor 2.

Une plaque de circuit imprimé 4 portant divers composants électroniques destinés à assurer le fonctionnement et la commande du moteur est fixée à la paroi 3 du moteur opposée à celle dont fait saillie l'arbre 2. La face opposée de la plaque de circuit imprimé 4 porte par exemple un connecteur 5 ou autre moyen de raccordement électrique.

Parmi les composants électriques ou électroniques montés sur la plaque de circuit imprimé 4, on a représenté divers composants 6a, 6b uniquement à titre d'exemple. En outre, il est prévu selon la présente invention d'utiliser parmi les composants du circuit électronique au moins un composant 7 constituant un circuit intégré de commande, par exemple en boîtier "Multiwatt". Les fabricants de circuits intégrés de commande de moteur ont de plus en plus tendanoe à introduire dans leurs circuits des éléments assurant une fonction de protection thermique dès qu'une température de jonction dépasse un seuil déterminé, couramment de l'ordre de 120 à 150°C, par exemple 140°C. De tels composants sont par exemple disponibles auprès de la Société SGS-Thomson Microelectronics sous la référence L298.

La présente invention prévoit de monter le composant 7 de façon que l'une des faces de son boîtier soit appliquée contre le côté 3 de l'enveloppe métallique du moteur.

Ainsi, si le moteur surchauffe, le composant chauffera et la protection automatique interne du circuit intégré entrainera l'interruption de l'alimentation du moteur. La fonction de sécurité est ainsi assurée non seulement pour l'échauffement du composant électronique mais aussi pour oelui du moteur lui-même grâce à l'utilisation d'un circuit intégré unique.

La présente invention prévoit aussi une façon simple d'assurer le contact entre le boîtier du circuit intégré 7 et l'enveloppe métallique du moteur. Comme cela est représenté, le circuit intégré 7 et les autres composants 6a, 6b... sont montés sur la plaque de circuit imprimé 4 de sorte que ce soit la face externe (opposée au circuit imprimé) du circuit intégré 7 qui soit l'élément le plus en saillie parmi tous les composants fixés au circuit imprimé.

Des vis 9 sont prévues pour fixer le circuit imprimé 4 à la paroi 3 de l'enveloppe du moteur. Deux au moins de ces vis sont disposées par rapport au circuit intégré 7 pour assurer un contact presseur entre la face externe de celui-ci et la paroi 3 de l'enveloppe 1 du moteur grâce à l'élasticité naturelle du circuit imprimé sans prévoir aucune pièce de montage supplémentaire.

La figure 2 représente une variante de réalisation de la présente invention dans laquelle, en plus des composants 6a, 6b montés sur la plaque de circuit imprimé 4 du même côté que le circuit intégré 7, sont prévus des composants supplémentaires 8a, 8b... montés par exemple selon la technologie CMS (montage en surface) sur la face externe du circuit imprimé.

On a en outre représenté en figure 2 une plaque de protection 10 en un matériau isolant fixée au moteur ou à la plaque de circuit imprimé 4 pour protéger oette plaque de circuit imprimé contre toute agression mécanique et éviter tout court-circuit électrique. Eventuellement, un connecteur 11 est monté sur la plaque isolante 10.

Le moteur selon la présente invention peut par exemple être choisi pour que l'axe 2 entraîne une turbine de ventilation coaxiale et externe à ce moteur. Ainsi, le flux d'air de la turbine refroidit simultanément le moteur et le circuit électronique associé. L'invention trouve une application particulièrement utile dans ce cas car, si le circuit électronique était disjoint du moteur, étant donné la circulation d'air, ce circuit électronique serait refroidi indépendamment d'un échauffement du moteur et il faudrait alors recourir à des moyens spéciaux de détection de température du moteur.

Bien entendu, la présente invention est susceptible de nombreuses variantes et modifications qui apparaîtront à l'homme de l'art, notamment en ce qui concerne la structure du moteur et son utilisation. Par exemple, l'enveloppe du moteur pourra avoir une forme autre que celle d'un cylindre de révolution et le circuit imprimé pourra être fixé à une paroi autre que celle opposée à la paroi dont sort l'arbre du moteur (ce circuit imprimé pourra même être appliqué contre cette dernière paroi).

## Revendications

1. Moteur électrique dont l'aspect extérieur est celui d'une enveloppe métallique (1), un arbre de rotation (2) du moteur sortant d'au moins un côté de l'enveloppe, ce moteur étant associé à un circuit électronique de commande dont les composants (6a, 6b) sont montés sur une carte de circuit imprimé (4), caractérisé en ce que :
au moins un desdits composants est un circuit intégré (7) comprenant des moyens d'inhibition quand sa température dépasse une valeur prédéterminée,
ledit circuit intégré (7) est monté de sorte que sa face opposée au circuit imprimé (4) constitue la surface la plus en saillie parmi les composants montés sur le circuit imprimé, et
le circuit imprimé (4) est monté sur une paroi (3) de ladite enveloppe (1) de sorte que ladite face du circuit intégré (7) soit en appui sur ladite paroi et en contact direct avec celle-ci.

2. Moteur électrique selon la revendication 1, caractérisé en ce que le circuit imprimé est vissé sur ladite paroi (3), les vis (9) étant disposées pour que ladite face du circuit intégré (7) soit appliquée contre la paroi sous l'effet de l'élasticité de la carte de circuit imprimé (4).

3. Moteur électrique selon la revendication 1, caractérisé en ce qu'il comprend en outre une plaque de protection isolante (10) montée en regard de la carte de circuit imprimé (4) du côté opposé à ladite paroi (3).

4. Moteur électrique selon la revendication 1, caractérisé en ce que ladite paroi (3) est disposée du côté opposé à celui dont sort l'arbre de rotation (2) du moteur.

5. Application du moteur selon l'une quelconque des revendications 1 à 4 comme moteur d'entraînement d'une turbine coaxiale et périphérique à ce moteur.

## Patentansprüche

1. Elektromotor, der nach außen hin ein Metallgehäuse (1) aufweist, mit einer an wenigstens einer Seite des Gehäuses austretenden Rotationswelle (2) des Motors, wobei der Motor einer elektrischen Steuerschaltung zugeordnet ist, deren Schaltungsbauteile (6a, 6b) auf einer gedruckten Schaltungstafel bzw. Leiterplatte (4) angeordnet sind, dadurch gekennzeichnet, daß
- wenigstens eines der genannten Bauteile eine integrierte Schaltung (7) mit Mitteln zur Inhibition bzw. Unterbrechung, sobald ihre Temperatur einen vorgegebenen Wert überschreitet, ist,
- die integrierte Schaltung (7) so ausgebildet und angeordnet ist, daß ihre von der gedruckten Schaltung (4) abgewandte Oberfläche unter den auf der gedruckten Schaltung angeordneten Bauteile am weitesten übersteht, und
- die gedruckte Schaltung (4) an einer Wandung (3) des genannten Gehäuses (1) so angeordnet ist, daß die genannte Oberfläche der integrierten Schaltung (7) gegen die genannte Gehäusewandung anliegt und in direktem Kontakt mit dieser steht.

2. Elektromotor nach Anspruch 1, dadurch gekennzeichnet daß die gedruckte Schaltung mit der Wandung (3) verschraubt ist, wobei die Schrauben (9) so angeordnet sind, daß die Oberfläche der integrierten Schaltung (7) durch die elastische Federungswirkung der gedruckten Schaltungs- bzw. Leiterplatte (4) gegen die Motorgehäusewandung gedrückt wird.

3. Elektromotor nach Anspruch 1, dadurch gekennzeichnet, daß der Motor des weiteren eine isolierende Schutzplatte (10) in solcher Anordnung aufweist, daß sie der gedruckten Schaltungs- bzw. Leiterplatte (4) an deren von der Gehäusewandung (3) abgewandten Seite gegenübersteht.

4. Elektromotor nach Anspruch 1, dadurch gekennzeichnet, daß die Gehäusewandung (3) auf der Seite liegt, welche der Seite, an welcher die Drehwelle (2) des Motors übersteht, entgegengesetzt ist.

5. Verwendung des Motors nach einem der Ansprüche 1 bis 4 als Antriebsmotor für eine bezüglich dem Motor periphere koaxiale Turbine.

## Claims

1. An electric motor, the external aspect of which is that of a metal casing (1), a rotation shaft (2) of the motor protruding from at least one side of the casing, this motor being associated with an electronic control circuit, the components (6a, 6b) of which are assembled on a printed circuit board (4), characterized in that:
at least one of said components is an integrated circuit (7) including means for inhibition when its temperature exceeds a predetermined value,
the integrated circuit (7) is assembled so that its surface opposite to the printed circuit (4) protrudes most among the components mounted on the printed circuit, and
the printed circuit (4) is mounted on a wall (3) of said casing (1) so that said surface of the integrated circuit (7) bears against said wall and is in direct contact therewith.

2. The electric motor of claim 1, wherein the printed circuit is screwed to the wall (3), the screws (9) being arranged so that said surface of the integrated circuit (7) is applied against the wall by the effect of the resilience of the printed circuit board (4).

3. The electric motor of claim 1, further including an insulating protection plate (10) assembled facing the printed circuit board (4) on the side opposite to the wall (3).

4. The electric motor of claim 1, wherein the wall (3) is located on the side opposite to that from which the rotation shaft (2) of the motor protrudes.

5. Use of the motor of any of claims 1 to 4 as a motor for driving a coaxial turbine which is peripheral to this motor.
